# EUROPEAN PATENT SPECIFICATION

(11) **EP 2 481 924 B1**
(45) Date of publication and mention of the grant of the patent: **14.12.2016**
(21) Application number: 11382021.1
(22) Date of filing: 01.02.2011
(51) Int. Cl.: F03D 17/00

(54) **Device and method for visual analysis of a wind turbine blade**
Vorrichtung und Verfahren zur visuellen Analyse eines Windturbinenblatts
Dispositif et procédé pour l'analyse visuelle d'une pale d'éolienne

(43) Date of publication of application: 01.08.2012
(73) Proprietor: ALSTOM Renewable Technologies, 38100 Grenoble (FR)
(72) Inventor: Puigcorbé Punzano, Jordi, 08005 Barcelona (ES)
(74) Representative: ZBM Patents - Zea, Barlocci & Markvardsen

(56) References cited:
- EP-A2- 2 333 329
- WO-A2-2009/143849
- DE-A1-102006 032 387
- DE-A1-102008 053 928
- DE-U1- 29 609 242
- PAHLKE T ET AL: "THE OPTIFARM WIND FARM SURVEILLANCE AND VIDEO MONITORING SYSTEM", EWEA SPECIAL TOPIC CONFERENCE ON OFFSHORE WIND ENERGY, XX, XX, 10 December 2001 (2001-12-10), pages 1-03, XP001127014,

## Description

### Field of the invention

The present invention relates to visual analysis and more particularly to a device for visual analysis of a wind turbine blade as defined in the preamble of claim 1. The invention further relates to a method for visual analysis of a wind turbine blade as defined in the preamble of claim 9.

### BACKGROUND ART

Changes in morphological properties in wind turbine blades due, for example, to the presence of debris, ice or other extraneous elements along the blade surface, have been proven to negatively impact on wind turbine power production or at least result in imbalances in the rotor which may lead to non predicted loads and vibrations in the drive train. Morphological imperfections on the blade surface induced during operation are therefore a growing concern as being an indication of premature failure and/or malfunctioning in a wind turbine blade.

In this respect, it has been necessary to perform regular maintenance operations in order to prevent such morphological imperfections on the blade surface from being occurred. Performing regular inspection and maintenance operations on a wind turbine is expensive and very hard, especially considering the height and the overall size of a wind turbine. In addition, accidents of operators involved in such operations are unfortunately frequent. Furthermore, in cases where the wind turbine is in remote locations (e.g. offshore wind turbines) or locations that are hard to be accessed (remote mountainous or rough sea regions) regular inspection and maintenance operations as well as the use of handling and hoisting equipment for said operations become highly difficult.

In addition to the need of performing regular maintenance operations in the wind turbine to avoid or at least mitigate damages and/or ineffective wind turbine operation, several different methods have been used so far for detecting the presence of abnormal conditions in wind turbine blades. These methods are divided into indirect observation and direct observation methods.

Indirect observation methods mainly consist of indirect analysis for detecting ice and imperfections on a wind turbine blade. Indirect analysis may consist, for example, in comparing an actual power coefficient value to an expected actual power coefficient value under normal operating conditions. This is usually carried out through the use of sensors adapted for obtaining several measuring mechanical variables from the wind turbine, such as vibrations, loads, deflection, etc. For example, it is known to use strain sensors such that variations in their output signal, due to changes in the mass of the turbine blade on account of the formation of debris, ice or other extraneous elements along the blade surface are detected.

Indirect observation methods are complex and inaccurate. Information obtained through these methods is limited and therefore it should be complemented with additional data, e.g. weather data.

In order to get a clearer view into wind turbine performance, methods involving direct observation of the blades have been further proposed. Such methods are performed through the use of image capturing means for capturing at least one portion of the wind turbine blade surface.

One example of direct observation method is disclosed in document EP2184485 in which a sensor is provided to monitor a wind turbine blade. The sensor sends an output signal to a computer processor which, by means of a software application, is compared with a predetermined value to determine whether solid water is present at the blade.

A further example of direct observation method is disclosed in document US2010054940 in which the presence or absence of debris is determined through sensors, such as cameras, that directly monitor the blades. The images captured by the sensors are sent to a processor in order to compare them with stored ones. When the transmitted images show the presence of debris greater than the debris shown on the stored images, the processor initiates a cleaning process.

WO2009143849 describes a rotor for a wind turbine comprising at least one wind turbine blade, at least one image capturing device, and one or more markers arranged on the blade. Since appearance of the markers is distinguishable by the image capturing device from the surrounding blade, at least one image capturing device may detect the position of the markers.

EP2333329 refers to a device for monitoring a wind turbine. The device includes a camera and it is fixed to the wind turbine. The device can provide a still image (e.g., upon request), a series of still images, and/or a continuous video stream. A controlled coupled to the monitoring device is also provided. It is configured to provide data representative of normal operation of the wind turbine.

### SUMMARY OF THE INVENTION

The present invention provides an improved photometric inspection device that is capable of providing highly accurate information relating to changes in the morphological and/or physical characteristics of a wind turbine blade. The device of the invention relies upon the above described direct observation method.

As it will be detailed hereinbelow, the device and the method of the present invention enable direct evaluation and analysis of at least one portion of a wind turbine blade surface. The device and the method of the present invention is capable of providing accurate and efficient detection of ice, debris and/or morphological and/or physical characteristics of at least one portion of a wind turbine blade surface, for example if debris, ice or other extraneous elements is present along at least one portion of the blade surface. The device of the present invention is therefore suitable for avoiding premature failure and/or malfunctioning in wind turbine blade and improving the maintenance operations.

Although the device of the invention will be disclosed herein as being adapted for providing a visual analysis of at least one portion of a wind turbine blade, or even the entire wind turbine blade, other parts of a wind turbine could be also analyzed by means of the device of the invention.

The device of the invention comprises image capturing means for performing a direct evaluation and analysis of at least one portion of a wind turbine blade surface. Although any device suitable for converting the optical image of a blade to an electric signal, that is any suitable image sensor such as digital cameras and other imaging devices, can be used, the image capturing means of the invention preferably comprises a digital imaging charge-coupled device (CCD). CCD devices are widely used for obtaining high-quality image data at a low cost. The use of a digital imaging CCD device allows a reliable and fast synchronization of image capture.

The CCD device may be mounted on a wind turbine at any portion thereof. However, it is preferred that the CCD device is fitted in an upper portion of a wind turbine nacelle and, in general, on any location of a wind turbine from which a general image of the wind turbine blade surface can be clearly obtained in order to perform an accurate visual analysis of one portion or of the entire blade surface.

As used herein, the term "image" refers to the result of any reproduction, especially an optical reproduction, of any part of the wind turbine, and it may be also referred to as photograph, frame, picture, etc. The characteristics of the image obtained by the CCD device will not be described herein as they are well known by those skilled in the art and depend on the device through which they are obtained.

The image capturing means of the device of the invention serves the purpose of acquiring at least one image of at least one portion of the wind turbine blade. However, it is referred that the image capturing means is suitable for acquiring a number of images over a given period of time. Although the device disclosed herein is preferably suitable for the visual analysis of one portion or of the entire blade surface in a wind turbine, its use is not intended to be limited to this particular part and it could be used to other parts in a wind turbine where changes in their morphological properties could lead to variations in power production, malfunctioning, etc. in the wind turbine.

The image capturing means are adapted for being triggered in order to acquire one or more images of a portion of a wind turbine blade surface or of the entire wind turbine blade surface according to at least a first and second different parameters related to the wind turbine blade. Acquired images are therefore associated with said first and second parameters. Acquired images are compared with corresponding predetermined reference images. Reference images have such first and second parameters associated therewith. Reference images may be previously stored in a database.

Image comparison is carried out only when said first and second parameters associated with the images obtained from at least one portion of the surface of a wind turbine blade, or other part of the wind turbine, correspond to said first and second parameters associated with the reference images. Correspondence between the pairs of parameters of the images obtained and those of the reference images ensures that only images obtained exactly in the same blade position, that is given by said two parameters, are compared. This allows accurate and detailed information on the morphological imperfections on the blade surface to be obtained.

It is preferred that the first parameter is, or it is related to, the blade azimuth and the second parameter is, or it is related to, the blade pitch at a given time, that is, the angular position around the hub axis and the blade longitudinal axis, respectively.

The pair of parameters determining the position of the blade, e.g. relative to the nacelle, allows the relative position of the blade to be accurately determined and therefore an effective image blade comparison to be carried out. Current blade images are therefore compared with reference images in a way that both images (the one being measured and the reference image) were taken in the same position as both were at the same azimuth and pitch positions.

As a consequence, no video is needed for comparison and therefore simpler equipment is thus employed. The use of markers or complex sensors is therefore avoided.

In some embodiments of the invention, the image capturing means can be adapted for being triggered in order to acquire at least one image according to blade azimuth parameters wherein these blade azimuth parameters can be obtained from a sensor that is fitted at a low speed shaft and/or at a generator rotor in the wind turbine or even in the rotor hub of the wind turbine. Such blade azimuth sensor may be either a sensor already present in the wind turbine itself or it may be fitted to cooperate with the device of the invention.

It is also provided that the image capturing means can be adapted for being triggered in order to acquire at least one image according to blade pitch parameters wherein these blade pitch parameters can be obtained from a sensor fitted at a pitch drive system in the wind turbine. All of said sensors are suitable for obtaining both blade azimuth and blade pitch parameters at a given time in a way that each captured image can be associated with said parameters so that they can be compared to respective reference images having said two parameters related therewith

In some embodiments of the invention, the capturing means may be adapted for being triggered in order to acquire image or images of at least one portion of the blade surface according to at least one additional parameter. This additional parameter may be related, for example, to blade surface temperature and/or wind speed or even humidity.

Parameters considered for comparing the device is key to obtain the best accuracy when comparing the images since images are acquired at the right time. By obtaining images than can be compared with respective reference images that were obtained in the same conditions, an accurate image comparison can be performed of very small details in the wind turbine blade. This allows more detailed information to be obtained in a way that, for example, not only ice can be detected but its size can be determined as well. An accurate 3D inspection of the blade surface (or at least a portion thereof) is therefore possible.

The disclosed photometric inspection device allows wind turbine safety to be improved in a way that damages can be prevented and frequency of maintenance operations can be lowered.

A method is further disclosed according to the invention for visual analysis of at least one portion of a wind turbine blade. This method can be carried out by the above described device. The method of the invention comprises the following steps:
- capturing one or a plurality of images of at least one portion of a wind turbine blade at a given time, for example through the use of image capturing means, based on at least a first and second parameters related to the wind turbine blade;
- comparing, e.g. through a suitable image processing software, the captured image with a predetermined reference image that can be, e.g. stored on a suitable database that can be accessed through a computer software, based on said first and second parameters such that only images having the same first and second respective parameters are compared.

As stated above, said parameters may be, or may be related to, blade azimuth and blade pitch, blade surface temperature and/or wind speed obtained at a given time.

It is envisaged that the method may further comprise a step of outputting an alarm signal to warn an operator for any abnormalities on the wind turbine, blade surface.

Through the use of the photometric device and method as disclosed, a digital photogrammetric 3D non-contact visual analysis can be accurately performed at a low cost. The disclosed method provides direct and accurate information over a portion or the entire blade surface without requiring any marker arid/or any sensors attached on the blade surface.

The visual analysis can be used both for damage avoidance and for accurate measuring and on-line inspection of debris, ice or other extraneous elements along the blade surface.

### BRIEF DESCRIPTION OF THE DRAWINGS

A particular embodiment of a device and a method for visual analysis of a wind turbine blade according to the present invention will be described in the following, only by way of non-limiting example, with reference to the appended drawings, in which:
Fig. 1 is a general fragmentary elevational view of a wind turbine of the type having gearbox in which a device according to one embodiment of the invention has been fitted;
Fig. 2 is a general rear view of the wind turbine in Fig. 1 in which a device according to one embodiment of the invention is provided for capturing blade images at a given blade position, e.g. when the blade is in a vertical position;
Fig. 3 is a general fragmentary elevational view of the wind turbine in Fig. 1 that is fitted with a device according to the device of the invention in which details of such device are shown; and
Fig. 4 is a general fragmentary view of a direct drive wind turbine in which a device according to one embodiment of the invention is shown.

### DETAILED DESCRIPTION OF PARTICULAR EMBODIMENTS

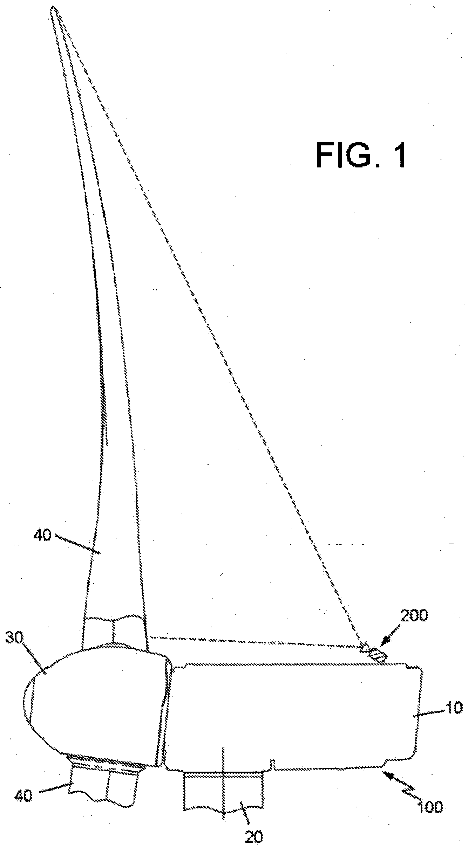

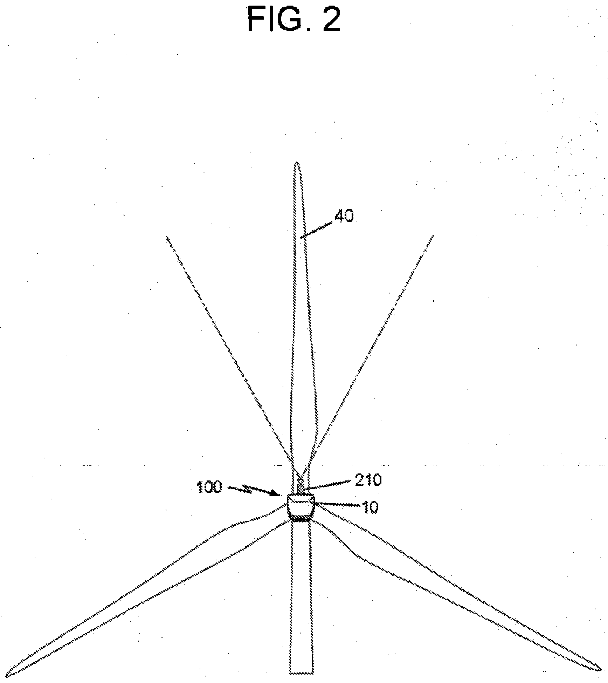

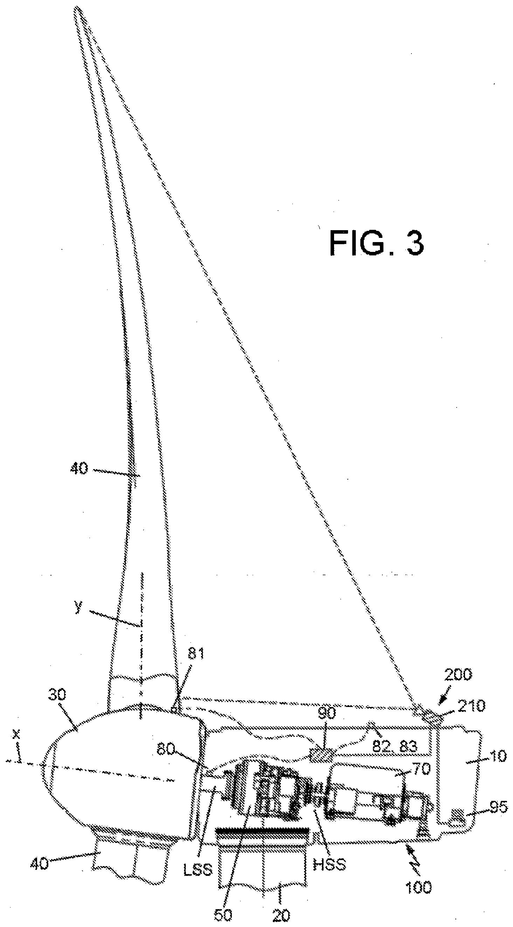

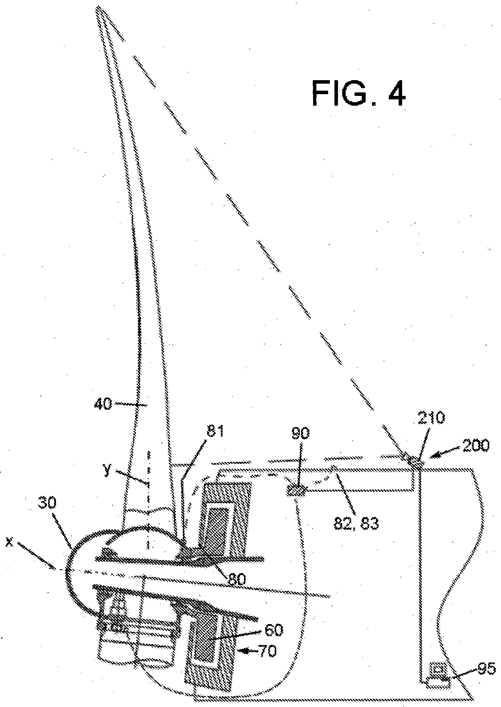

A wind turbine has been partly shown and indicated at 100 in the figures. Wind turbine 100 comprises a nacelle 10 supported on a tower 20 and a rotor hub 30 from which a number of blades 40 radially extend. Wind turbine 100 in Figs. 1-3 is of the type including a gearbox 50, shown in Fig. 3. Fig. 4 shows a wind turbine 100 of the direct drive type. Reference to wind turbine in Fig. 4 will be made below.

Referring to wind turbine 100 in Figs. 1-3, i.e. of the type including a gearbox 50 as shown in Fig. 3, gearbox 50 is housed within the nacelle 10 and serves the purpose of converting rotation of low speed shaft LSS, that is integral with or coupled to hub 30, into high speed rotation of high speed shaft HSS of a generator assembly 70.

A visual analysis device shown at 200 is fitted on the wind turbine 100. The visual analysis device 200 is suitable to perform a photometric inspection of at least one portion of a wind turbine part, such as for example, the surface of a blade 40. The visual analysis device 200 comprises a digital CCD camera 210 as image capturing means.

The device 200 further includes sensors indicated at 80-83. Sensors may be, for example, low speed shaft azimuth sensors 80, pitch sensors 81 provided at a pitch actuation system, and temperature, wind speed/direction and humidity sensors 82, 83. Temperature, wind speed/direction and humidity sensors 82, 83 are commonly used in wind turbines, such as in the form of anemometers, Pt100/Pt1000 sensors, hygrometers, etc. for measuring relative humidity. One or more of the sensors 80-81 may be encoders of the relative or absolute type. All of some of the sensors 80-83 may be duplicated for redundancy.

Azimuth sensor 80 is provided in the low speed shaft LSS of the wind turbine 100 and it is adapted to read the position of the blade 40 according to horizontal axis x. Pitch sensor 81 is provided at the pitch drive system (i.e. at the pitch actuator or at the pitch bearing) of the wind turbine 100 and it is adapted to read the position of the blade 40 according to blade longitudinal axis y.

An input/output wind turbine control unit 90 is provided for receiving data sent by sensors 80-83. Input/output wind turbine control unit 90 sends suitable commands causing the digital CCD camera 210 to be triggered according to blade position parameters, that is, when the blade 40 is at predetermined position given by specific azimuth and pitch angle values.

Computing means 95 linked to the input/output wind turbine control unit 90 are further provided. Computing means 95 may include a computer that may be arranged within the nacelle 10 or it may be remotely located and wirelessly connected to the wind turbine control unit 90. Computing means 95 are suitable for running a surface calculation algorithm software.

The CCD camera 210 is mounted on an upper portion of the nacelle 10 from which a general image of at least one portion of the surface wind turbine blade 40 or other part of the wind turbine 100 can be obtained in order to perform an accurate visual analysis of such wind turbine part.

As stated above, the CCD camera 210 is adapted to receive commands from the input/output wind turbine control unit 90 according to data from sensors 80-83, said data consisting at least of values obtained from the low speed shaft azimuth sensor 80, that is, the angular position around the hub axis x, and the pitch blade sensor 81, that is the angular position around the blade longitudinal axis y. Based on these data, the CCD camera 210 is triggered in order to acquire one or a number of images of the entire or of one portion of the surface of the blade 40 over a given period of time.

Images acquired by the CCD camera 210 are compared with corresponding predetermined reference images, for example images that have been previously stored in a suitable database linked to computer means 95. Said predetermined reference images are based on reference parameters. In this respect, where the image or images acquired by the CCD camera 210 are obtained by triggering of the CCD camera 210 according to values obtained from the low speed shaft azimuth sensor 80 and the pitch blade sensor 81, such images are compared with predetermined reference images which were also obtained based upon values relating to blade azimuth and blade pitch values. In other words, comparison is carried out only when the acquired images and the reference images are based on the same values, that is, values from the low speed shaft azimuth sensor 80 and the pitch blade sensor 81. This ensures that only images obtained exactly in the same blade position that is given by said parameters, are compared and consecutive images are acquired at exactly the same position. This allows accurate and detailed information on the morphological imperfections on the surface of the blade 40 to be obtained.

Although values from azimuth sensor 80 in the low speed shaft LSS or in the rotor hub 30 and pitch blade sensor 81 in the pitch drive are the most preferred, additional values from other sensors 82, 83 can be used, such as for example, those related to one or more selected from wind speed, ambient temperature, and blade surface temperature.

In use, the CCD camera 210 is triggered for capturing a number of images of at least a portion of the wind turbine blade 40 at a given time, based on the above mentioned parameters supplied by at least sensors 80, 81 and, in addition, by sensors 82, 83 if necessary. The images acquired by CCD camera 210 are compared ,through an image processing software by the computing means 95, for example, a surface calculation algorithm implemented in the computing means 95. This algorithm is capable of identifying any anomaly on the surface of the blade 40. Comparison is carried out between the images acquired by CCD camera 210 and corresponding predetermined reference images stored on the database. Such a correspondence is established by the above mentioned parameters supplied by at least sensors 80, 81 and, in addition, by sensors 82, 83 if necessary in a way that only images having the same respective parameters are compared.

Where any abnormalities on at least one portion of the surface of wind turbine blade 40 are detected after said comparison step, an alarm signal is output to warn an operator. Furthermore, depending of the presence of debris, ice, snow or other extraneous elements, the wind turbine control unit 90 delivers a command to start up the wind turbine 100 or to delay its operation up to better conditions, for example, after removal of such debris, ice, snow or other extraneous elements affecting the blade surface and therefore wind turbine performance.

A wind turbine 100 of the directly driven type is shown in Fig. 4. In this type of wind turbine 100, generator rotor 60 is directly driven by rotor hub 30. In the case of directly driven wind turbine 100 as shown in Fig. 4, no low speed shaft LSS is provided (as in the "gearbox type" wind turbine shown in Fig. 3) so an azimuth sensor 80 must be fitted in some other location, preferably on the generator rotor 60, for reading the position of the blade 40 or at the rotor hub 30. Pitch sensor 81 is provided (as in the "gearbox type" wind turbine in Fig. 3) at the pitch drive for reading blade pitch position.

Commands and signals from sensors 80-83 to the control unit 90 and computing means 95 can be sent through any way known in the art. Communications may be for example wired or they may be wirelessly or even both.

## Claims

1. A device (200) for visual analysis of a wind turbine blade (40) comprising image capturing means (210) for acquiring at least one image of at least one portion of the wind turbine blade (40), **characterized in that** said capturing means (210) being adapted to be triggered in order to acquire said at least one image according to at least a first and second different parameters related to the wind turbine blade (40) and according to an additional parameter selected from at least one parameter related to wind speed, blade surface temperature and ambient temperature, whereby the image acquired may be compared with a predetermined reference image, said predetermined reference image being based on said first and second parameters.

2. The device (200) of claim 1, wherein the first parameter is or relates to the blade azimuth and the second parameter is or relates to the blade pitch at a given time.

3. The device (200) of claim 2, wherein the image capturing means (210) are adapted for being triggered in order to acquire at least one image according to blade azimuth parameters that are obtained from a sensor (80) fitted at a low speed shaft (LSS) in the wind turbine.

4. The device (200) of claim 2, wherein the image capturing means (210) are adapted for being triggered in order to acquire at least one image according to blade azimuth parameters that are obtained from a sensor (80) fitted at a generator rotor (60) in the wind turbine.

5. The device (200) of claim 2, wherein the image capturing means (210) are adapted for being triggered in order to acquire at least one image according to blade azimuth parameters that are obtained from a sensor (80) fitted at a rotor hub (30) in the wind turbine.

6. The device (200) of claim 2, wherein the image capturing means (210) are adapted for being triggered in order to acquire at least one image according to blade pitch parameters that are obtained from a sensor (81) fitted at a pitch drive system in the wind turbine.

7. The device (200) of any of the preceding claims, wherein the image capturing means comprise a CCD device (210).

8. The device (200) of any of the preceding claims, wherein the image capturing means (210) are mounted on an upper portion in a wind turbine nacelle (10).

9. A method for visual analysis of a wind turbine blade (40) comprising the step of capturing at least one image of at least one portion of the wind turbine blade (40) at a given time and comparing said image with a predetermined reference image, **characterized in that** the image capturing step is carried out by capturing at least one image according to at least a first and second parameters related to the wind turbine blade (40) and according to an additional parameter selected from at least one parameter related to wind speed, blade surface temperature and ambient temperature, wherein said predetermined reference image with which the captured image is compared is based on said first and second parameters.

10. The method of claim 9, wherein the first parameter is or relates to the blade azimuth and the second parameter is or relates to the blade pitch at a given time.

11. The method as claimed in any of the claims 9 to 10, wherein said image comparing step is performed through an image processing software.

12. The method as claimed in any of the claims 9 to 11, wherein it further comprises the step of outputting an alarm signal to warn an operator for any abnormalities on the wind turbine blade surface.

## Patentansprüche

1. Eine Vorrichtung (200) zur visuellen Analyse eines Windturbinenblatts (40) umfassend ein Bildaufnahmemittel (210) zur Erfassung von mindestens einem Bild von mindestens einem Teil des Windturbinenblattes (40), **dadurch gekennzeichnet, dass** das Aufnahmemittel (210) angepasst ist, um ausgelöst zu werden, um das mindestens eine Bild gemäß mindestens einem ersten und einem zweiten unterschiedlich voneinander auf das Windturbinenblatt (40) bezogenen Parametern und gemäß einem weiteren Parameter zu erfassen, der aus mindestens einem auf Windgeschwindigkeit, Blattoberflächentemperatur und Umgebungstemperatur bezogenen Parameter ausgewählt ist, wobei das erfasste Bild mit einem vorherbestimmten Bezugsbild verglichen werden kann, wobei das vorherbestimmte Bezugsbild auf den ersten und zweiten Parametern basiert.

2. Die Vorrichtung (200) des Anspruchs 1, wobei der erste Parameter das Blattazimut ist oder sich darauf bezieht und der zweite Parameter der Blattverstellwinkel zu einem gegebenen Zeitpunkt ist oder sich darauf bezieht.

3. Die Vorrichtung (200) des Anspruchs 2, wobei das Bildaufnahmemittel (210) angepasst ist, um ausgelöst zu werden, um mindestens ein Bild gemäß Blattazimutparametern zu erfassen, die von einem an einer langsam laufenden Welle (*LSS - low speed shaft*) in der Windturbine angeordneten Sensor (80) erhalten werden.

4. Die Vorrichtung (200) des Anspruchs 2, wobei das Bildaufnahmemittel (210) angepasst ist, um ausgelöst zu werden, um mindestens ein Bild gemäß Blattazimutparametern zu erfassen, die von einem an einem Generatorrotor (60) in der Windturbine angeordneten Sensor (80) erhalten werden.

5. Die Vorrichtung (200) des Anspruchs 2, wobei das Bildaufnahmemittel (210) angepasst ist, um ausgelöst zu werden, um mindestens ein Bild gemäß Blattazimutparametern zu erfassen, die von einem an einer Rotornabe (30) in der Windturbine angeordneten Sensor (80) erhalten werden.

6. Die Vorrichtung (200) des Anspruchs 2, wobei das Bildaufnahmemittel (210) angepasst ist, um ausgelöst zu werden, um mindestens ein Bild gemäß Blattverstellparametern zu erfassen, die von einem an einem Blattverstellantriebssystem in der Windturbine angeordneten Sensor (81) erhalten werden.

7. Die Vorrichtung (200) von einem der vorhergehenden Ansprüche, wobei das Bildaufnahmemittel eine CCD-Vorrichtung (210) umfasst.

8. Die Vorrichtung (200) von einem der vorhergehenden Ansprüche, wobei das Bildaufnahmemittel (210) auf einem oberen Teil in einer Windturbinengondel (10) montiert ist.

9. Ein Verfahren zur visuellen Analyse eines Windturbinenblatts (40) umfassend den Schritt, in dem mindestens ein Bild von mindestens einem Teil des Windturbinenblatts (40) zu einem gegebenen Zeitpunkt aufgenommen wird und das Bild mit einem vorherbestimmten Bezugsbild verglichen wird, **dadurch gekennzeichnet, dass** der Bildaufnahmeschritt dadurch durchgeführt wird, dass mindestens ein Bild gemäß mindestens einem ersten und zweiten auf das Windturbinenblatt (40) bezogenen Parametern und gemäß einem weiteren Parameter aufgenommen wird, der aus mindestens einem auf Windgeschwindigkeit, Blattoberflächentemperatur und Umgebungstemperatur bezogenen Parameter ausgewählt ist, wobei das vorherbestimmte Bezugsbild, mit dem das aufgenommene Bild verglichen wird auf den ersten und zweiten Parametern basiert.

10. Das Verfahren des Anspruchs 9, wobei der erste Parameter das Blattazimut ist oder sich darauf bezieht und der zweite Parameter der Blattverstellwinkel zu einem gegebenen Zeitpunkt ist oder sich darauf bezieht.

11. Das Verfahren wie in einem der Ansprüche 9 bis 10 beansprucht, wobei der Bildvergleichsschritt durch eine Bildverarbeitungssoftware durchgeführt wird.

12. Das Verfahren wie in einem der Ansprüche 9 bis 11 beansprucht, wobei es weiterhin den Schritt umfasst, in dem ein Alarmsignal ausgegeben wird, um einen Bediener vor etwaigen Auffälligkeiten auf der Windturbinenblattoberfläche zu warnen.

## Revendications

1. Un dispositif (200) pour l'analyse visuelle d'une pale d'éolienne (40) comprenant un moyen de capture d'images (210) pour l'acquisition d'au moins une image d'au moins une partie de la pale d'éolienne (40), **caractérisé en ce que** ledit moyen de capture (210) est adapté pour être déclenché afin d'acquérir ladite au moins une image selon au moins un premier et un deuxième paramètre différents liés à la pale d'éolienne (40) et selon un paramètre additionnel choisi dans au moins un paramètre lié à la vitesse du vent, la température de surface de pale et la température ambiante, dans lequel l'image acquise peut être comparée avec une image de référence prédéterminée, étant ladite image de référence prédéterminée basée sur lesdits paramètres premier et deuxième.

2. Le dispositif (200) de la revendication 1, dans lequel le premier paramètre est ou est lié à l'azimut de pale et le deuxième paramètre est ou est lié à l'angle de pas de pale à un moment donné.

3. Le dispositif (200) de la revendication 2, dans lequel le moyen de capture d'images (210) est adapté pour être déclenché afin d'acquérir au moins une image selon des paramètres d'azimut de pale qui sont obtenus par un capteur (80) installé sur un arbre petite vitesse (APV) dans l'éolienne.

4. Le dispositif (200) de la revendication 2, dans lequel le moyen de capture d'images (210) est adapté pour être déclenché afin d'acquérir au moins une image selon des paramètres d'azimut de pale qui sont obtenus par un capteur (80) installé sur un rotor de générateur (60) dans l'éolienne.

5. Le dispositif (200) de la revendication 2, dans lequel le moyen de capture d'images (210) est adapté pour être déclenché afin d'acquérir au moins une image selon des paramètres d'azimut de pale qui sont obtenus par un capteur (80) installé sur un moyeu de rotor (30) dans l'éolienne.

6. Le dispositif (200) de la revendication 2, dans lequel le moyen de capture d'images (210) est adapté pour être déclenché afin d'acquérir au moins une image selon des paramètres d'angle de pas de pale qui sont obtenus par un capteur (81) installé sur un système d'entraînement de pas de pale dans l'éolienne.

7. Le dispositif (200) de l'une quelconque des revendications précédentes, dans lequel le moyen de capture d'images comprend un dispositif CCD (210).

8. Le dispositif (200) de l'une quelconque des revendications précédentes, dans lequel le moyen de capture d'images (210) est monté sur une partie supérieure dans une nacelle d'éolienne (10).

9. Un procédé pour l'analyse visuelle d'une pale d'éolienne (40) comprenant l'étape de capture d'au moins une image d'au moins une partie de la pale d'éolienne (40) à un moment donné et de comparaison de ladite image avec une image de référence prédéterminée, **caractérisé en ce que** ladite étape de capture d'images est effectuée en capturant au moins une image selon au moins un premier et deuxième paramètre liés à la pale d'éolienne (40) et selon un paramètre additionnel choisi dans au moins un paramètre lié à la vitesse du vent, la température de surface de pale et la température ambiante, dans lequel ladite image de référence prédéterminée avec laquelle l'image capturée est comparée est basée sur lesdits paramètres premier et deuxième.

10. Le procédé de la revendication 9, dans lequel le premier paramètre est ou est lié à l'azimut de pale et le deuxième paramètre est ou est lié à l'angle de pas de pale à un moment donné.

11. Le procédé tel que revendiqué dans l'une quelconque des revendications 9 ou 10, dans lequel ladite étape de comparaison d'images est effectuée moyennant un logiciel de traitement d'images.

12. Le procédé tel que revendiqué dans l'une quelconque des revendications 9 à 11, comprenant en outre l'étape de délivrance d'un signal d'alarme pour alerter un opérateur sur des anomalies dans la surface de pale d'éolienne.
